# EUROPÄISCHE PATENTSCHRIFT

(11) **EP 3 526 476 B1**
(45) Veröffentlichungstag und Bekanntmachung des Hinweises auf die Patenterteilung: **23.03.2022**
(21) Anmeldenummer: 17790672.4
(22) Anmeldetag: 10.10.2017
(51) Int. Cl.: F16B 5/12

(54) **CLIP MIT SCHWIMMENDER LAGERUNG**
FLOATINGLY MOUNTED CLIP
CLIP À MONTAGE FLOTTANT

(30) Priorität: 14.10.2016 DE 102016012250
(43) Veröffentlichungstag der Anmeldung: 21.08.2019
(73) Patentinhaber: A. Raymond et Cie. SCS, 38000 Grenoble (FR)
(72) Erfinder: PODSADNY, Thomas, 38302 Wolfenbüttel (DE); DE JONG, Michael, 79588 Efringen-Kirchen (DE); MASCHAT, Kevin, 79739 Schwörstadt (DE)
(74) Vertreter: Tilmann, Max Wilhelm
(86) Internationale Anmeldenummer: PCT/EP2017/001196
(87) Internationale Veröffentlichungsnummer: WO 2018/068891

(56) Entgegenhaltungen:
- FR-A- 1 402 266
- GB-A- 618 939
- JP-A- H04 233 134
- US-A- 2 139 567
- US-A- 3 864 789
- US-A- 5 241 727
- US-A- 5 377 662
- US-A- 5 879 101

## Beschreibung

Die Erfindung betrifft eine Vorrichtung mit einem ersten Element und einem an dem ersten Element befestigten zweiten Element, wobei das erste Element eine Offnung aufweist, in der ein Clip eingeführt werden kann, und das zweite Element mittels dieses Clips an dem ersten Element befestigt ist.

Aus US 5,879,101 und US 2,526,532 sind Clips zum Befestigen eines ersten Elements an einem zweiten Element bekannt. In US 5,879,101 weist der Clip einen Kopf als auch eine Spitze auf. Der dort beschriebene Clip weist eine erste Seite und eine der ersten Seite gegenüberliegende zweite Seite auf. Die gegenüberliegenden Seiten erstrecken sich von dem Kopf bis hin zur Spitze und weisen ein pilzkopfförmiges Profil auf. Der Kopf weist zwei gebogene Flügel auf, welche den Clip fest in der Öffnung eines Elementes halten und vorspannen. Die Flügelenden sind dabei abgerundet ausgeführt. Bei dem aus US 2526532 bekannten Clip sind ferner die Flügel am Kopf des Clips vor, während und nach der Montage direkt aneinander anliegend. Die Flügelenden sind zweigeteilt. Ein Teil weist den Durchmesser der Öffnung auf und schließt bündig mit der Öffnung ab, während der andere Teil hinter die Öffnung greift. Beide Teile fixieren den Clip fest in der Öffnung eines Elementes.

GB 618,939 A offenbart einen Clip, der zum Befestigen eines ersten Elements an einem zweiten Element geeignet ist.

US 3,864,789 A offenbart einen Federclip. Der am Flügelende eine gekrümmte Abstützfläche aufweist.

Vor diesem Hintergrund lag der vorliegenden Erfindung die Aufgabe zugrunde, einen Clip zum Befestigen eines ersten Elements an einem zweiten Element vorzuschlagen, der bei guter Zentrierung gleichzeitig nicht nur gegen Torsions- und Scherbelastung des zwischen dem Kopf und der Spitze befindlichen Teils widerstandsfähiger ist, sondern auch eine zu starre Halterung bei der Montage eines ersten Elementes an einem zweiten Element vermeidet, welche häufig zu Deformierungen oder Beschädigungen des Clips führt.

Diese Aufgabe wird durch den Gegenstand des Anspruchs 1, sowie durch den Gegenstand des Anspruchs 15 gelöst. Vorteilhafte Ausführungsformen sind in den Unteransprüchen und der hiernach folgenden Beschreibung wiedergegeben.

Die Erfindung geht von dem Grundgedanken aus, nicht nur abgerundete oder stumpfe Flügelenden an der Kopfseite zur Halterung des Clips in der Öffnung des den Clip haltenden ersten Elements vorzusehen, sondern auch zusätzliche Abstützflächen an den Flügelenden, welche den Clip insbesondere senkrecht zu seiner Längsachse stabilisieren, aber dennoch eine Translation des Clips in der zuletzt genannten Richtung in seiner Cliphalterung zulassen.

Unter einem "Clip" zum Befestigen eines ersten Elements an einem zweiten Element wird eine Befestigungsvorrichtung verstanden, die zumindest eine erste Kontaktfläche und zumindest eine zweite, der ersten Kontaktfläche zugewandte Kontaktfläche aufweist. Die erste Kontaktfläche ist in der Regel am Kopf des Clips vorgesehen, welcher zumeist zwei Flügel aufweist, während die zweite Kontaktfläche zwischen Kopf und Spitze des Clips vorgesehen ist. Derartige Befestigungsvorrichtungen sind dazu vorgesehen, mit einer Spitze in eine Ausnehmung, meist eine Öffnung, in dem ersten Element eingeführt zu werden. Dabei wird das die zweite Kontaktfläche tragende federnde Element während des Einschiebens eingedrückt, federt jedoch nach dem vollständigen Einführen in die Öffnung wieder in seine Ausgangsstellung zurück. Das erste Element ist zumindest abschnittweise im Bereich der Öffnung meist als flächiges Element, beispielsweise als Platte oder als Blech insbesondere eines Teils eines Rahmens eines Fahrzeugs ausgebildet. Das erste Element kann jedoch auch ein Sackloch mit einer entsprechend gewählten Hinterschneidung aufweisen, die dem federnden Element das Ausfedern ermöglicht, nachdem es einen engeren Teil der Öffnung oberhalb der Hinterschneidung passiert hat. Das zweite Element kann durch Klemmung an dem ersten Element befestigt werden, beispielsweise wenn es zwischen einem Kopf des Clips und einer Oberfläche des ersten Elements geschoben wird und der Abstand der ersten Kontaktfläche, die dann am Kopf des Clips vorgesehen ist, und der zweiten Kontaktfläche des Clips so gewählt ist, dass sie bei einer bestimmten Materialstärke des ersten Elements und einer bestimmten Materialstärke des zweiten Elements eine solche Klemmung erzeugen kann. Ebenso ist es denkbar, dass das zweite Element ebenfalls eine Öffnung aufweist und der Clip mit seiner Spitze durch beide Löcher geführt wird. Ebenso ist es denkbar, dass das zweite Element an dem Kopf des Clips befestigt wird, wenn dieser beispielsweise einen Haken oder einen Befestigungspilz aufweist oder wenn das zweite Element schlichtweg mit dem Kopf des Clips verklebt, verschweißt oder in anderer Weise fügend verbunden wird.

Unter einem Kopf eines solchen Clips wird eine an einem Ende des Clips vorgesehene Verbreiterung verstanden. Der Kopf ist in der Regel dafür vorgesehen, um zu verhindern, dass der Clip gänzlich durch eine Öffnung des ersten Elements geschoben werden kann.

Der Clip weist ferner eine Spitze auf. Mit "Spitze" wird im Kontext dieser Beschreibung lediglich dass dem Kopf gegenüberliegende Ende des Clips bezeichnet. Zwar ist es in einer bevorzugten Ausführungsform vorgesehen, dass ein sich von dem Kopf in Richtung auf die Spitze erstreckender Schaft des Clips zur Spitze hin verjüngt. Dies ist aber nicht zwingend notwendig. Als Spitze im Kontext dieser Beschreibung wird auch ein in einer denkbaren Ausführungsform vorzusehendes stumpfes Ende an dem dem Kopf gegenüber liegenden Ende eines Schafts verstanden. In einer bevorzugten Ausführungsform kann die Spitze pyramidenförmig oder kegelförmig oder pyramidenstumpfförmig oder kegelstumpfförmig zulaufen. Dies ist aber nicht zwingend notwendig. Die Spitze kann durch einen einzigen Abschnitt des Clips gebildet werden, beispielsweise durch einen Scheitel eines bogenförmigen Umbiegeabschnittes.

Zwischen dem Kopf und der Spitze weist der Clip einen aus der ersten Seite und der zweiten Seite und ggf. weiteren Teilen gebildeten Schaft auf.

Der Clip weist eine Längsachse auf, die sich vom Kopf zur Spitze erstreckt. Insbesondere bevorzugt ist der Schaft in seiner vom Kopf zur Spitze weisenden Längserstreckung länger, als in einer senkrecht zur Längserstreckung weisenden Breitenrichtung. Insbesondere bevorzugt weist die Längsachse des Clips in Richtung der Längserstreckung des Schafts.

In einer bevorzugten Ausführungsform ist der Clip bezüglich einer Ebene, die die Längsachse des Clips enthält, spiegelsymmetrisch ausgeführt. In einer alternativen Ausführungsform ist der Clip in der Weise rotationssymmetrisch ausgeführt, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann.

Der erfindungsgemäße Clip zum Befestigen eines ersten Elements an einem zweiten Element weist einen Kopf mit zwei sich in senkrechter Richtung zur Längsachse des Clips voneinander erstreckenden Flügeln und eine Spitze und eine erste Seite und eine zweite Seite auf, wobei sich die erste Seite und die zweite Seite von dem Kopf in Richtung der Längsachse des Clips auf die Spitze zu erstrecken, wobei die erste und die zweite Seite über die Spitze miteinander verbunden sind und so zusammendrückbar sind, dass sie um die Spitze aufeinander zu geschwenkt werden können. Zumindest eine Seite weist einen Abschnitt auf, der weiter von der Längsachse entfernt ist als ein anderer Abschnitt, wobei mindestens ein Flügel am Flügelende eine Abstützfläche aufweist, welche zumindest abschnittweise in einem Winkel von weniger als 45 Grad zur Längsachse des Clips verläuft.

Insbesondere bevorzugt beträgt der zuletzt genannte Winkel weniger als 35 Grad, in einer bevorzugten Ausführungsform weniger als 25 Grad, in einer ganz besonders bevorzugten Ausführungsform weniger als 15 Grad und in einer weiter bevorzugten Ausführungsform als 10 Grad. Insbesondere bevorzugt erstreckt sich ein Abschnitt der am Flügelende vorgesehenen Abstützfläche parallel zur Längsachse des Clips.

Angaben zu räumlichen Anordnungen von Teilen des Clips beziehen sich in dieser Beschreibung - soweit nichts anderes ausgeführt wird - auf den Clip in seiner unbelasteten, nicht eingebauten Form. Durch das Einführen in die Öffnung eines mit einem anderen Element zu verbindenden Elements kann der Clip andere Formen annehmen, können beispielsweise die beiden Seiten ausgehend von einer Lage im nicht belasteten Zustand um die Spitze aufeinander zu geschwenkt werden und dort durch Kontakt mit der die Öffnung begrenzenden Wandung in der aufeinander zu geschwenkten Lage gehalten werden. Soweit nichts anderes ausgeführt wird, beziehen sich Angaben zu räumlichen Anordnungen von Teilen des Clips nicht auf eine solche Einbaulage, sondern beschreiben den Clip so, wie er uneingebaut und von äußeren Kräften unbelastet vor einem Betrachter auf dem Tisch liegt.

In einer bevorzugten Ausführungsform erstreckt sich der Flügel von einem näher zur Längsachse liegenden Ausgangspunkt in Richtung senkrecht zur Längsachse des Clips von der Längsachse fort. Dabei weist der Flügel zwischen der am Flügelende vorgesehenen Abstützfläche und dem Ausgangspunkt einen Mittelteil auf. Dieser Mittelteil kann durch einen Abschnitt des Clips gebildet werden, der sich tatsächlich senkrecht zur Längsachse erstreckt, beispielsweise ein Bandabschnitt, der senkrecht zur Längsachse des Clips verläuft. In einer bevorzugten Ausführungsform wird der Mittelteil jedoch durch Abschnitte des Clips gebildet, deren Erstreckung zwar eine Komponente in Richtung senkrecht zur Längsachse des Clip haben, deren Erstreckung aber auch eine Komponente parallel zur Längsachse des Clips haben.

In einer bevorzugten Ausführungsform erstreckt sich der Mittelteil des Flügels von dem Ausgangspunkt bis zu einer am Übergang vom Mittelteil zur Abstützfläche vorgesehenen Kontaktlinie oder Kontaktfläche des Flügels und damit des Kopfes, die zum Kontakt mit einem der beiden miteinander zu verbindenden Elemente vorgesehen ist. In einer bevorzugten Ausführungsform ist der Ausgangspunkt des Flügels in Richtung der Längsachse des Clips beabstandet zur Kontaktlinie, bzw. Kontaktfläche des Flügels ausgeführt. Insbesondere bevorzugt ist der Ausgangspunkte des Flügels weiter entfernt von der Spitze des Clips angeordnet, als die Kontaktlinie, bzw. die Kontaktfläche. In einer bevorzugten Ausführungsform definiert der Abstand der Ausgangspunkts des Flügels zur Kontaktlinie, bzw. Kontaktfläche in Richtung der Längsachse die maximale Erstreckung des Kopfes in Richtung der Längsachse.

In einer bevorzugten Ausführungsform ist die Länge der Abstützfläche (gemessen in die Richtung, in die sich die Abstützfläche im Wesentlichen erstreckt) länger als 20 %, insbesondere bevorzugt länger als 30 %, insbesondere länger als 40 %, insbesondere bevorzugt länger als 60 % und insbesondere bevorzugt länger als 80 % der maximalen Erstreckung des Kopfes in Richtung der Längsachse, wobei als maximale Erstreckung des Kopfes in Richtung der Längsachse der maximale, in Längsrichtung gemessen Abstand zwischen dem in Längsrichtung maximal von der Spitze entfernten Punkt des Kopfes und dem in Längsrichtung minimal von der Spitze entfernten Punkt verstanden wird. In einer bevorzugten Ausführungsform entspricht die Länge der Abstützfläche (gemessen in die Richtung, in die sich die Abstützfläche im Wesentlichen erstreckt) der maximalen Erstreckung des Kopfes in Richtung der Längsachse. In einer bevorzugten Ausführungsform entspricht die Länge der Abstützfläche (gemessen in die Richtung, in die sich die Abstützfläche im Wesentlichen erstreckt) der maximalen Erstreckung des Kopfes in Richtung der Längsachse und dem Abstand der Ausgangspunkts des Flügels zur Kontaktlinie, bzw. Kontaktfläche in Richtung der Längsachse.

Als Kopf des Clips werden insbesondere bevorzugt alle Teile des Clips verstanden, die sich oberhalb einer senkrecht zur Längsachse des Clips verlaufenden Ebene befinden, die eine Kontaktlinie oder Kontaktfläche des Flügels und damit des Kopfes enthält, die zum Kontakt mit einem der beiden miteinander zu verbindenden Elemente vorgesehen ist.

In einer bevorzugten Ausführungsform ist die Abstützfläche eben ausgeführt. Insbesondere bevorzugt wird sie durch ein bandförmiges Element gebildet, das sich von dem Übergang zum Mittelteil des Flügels fort erstreckt. Es sind aber auch Ausführungsformen denkbar, bei denen die eine Kurvenform oder mehrfach zu Ecken gebogene Bögen aufweist. Beispielsweise kann die Abstützfläche eine Verstärkung und/oder eine Kehle auf.

In einer bevorzugten Ausführungsform bleibt die Breite des die Abstützfläche bildenden Abschnitts des Clips (die Richtung senkrecht zur Längsachse des Clips und nicht in Dickenrichtung des die Abstützfläche bildenden Abschnitts des Clips) über die Erstreckung der Abstützfläche konstant. In einer alternativen Ausführungsform verjüngt sich die Breite des die Abstützfläche bildenden Abschnitts des Clips.

In einer bevorzugten Ausführungsform weist mindestens eine Seite des Clips eine Seitenwand auf, wobei die Seitenwand ein oder mehrere Profilierungen und/oder Einstanzungen und/oder Verstärkungen im Bereich des an den Kopf angrenzenden Bereichs aufweist. Insbesondere bei einem zumindest abschnittweise flachen Querschnitt einer Seite, im Besonderen in Form eines flachen Bandes, vorzugsweise aus Blech, und/oder bei zumindest abschnittweise im Wesentlichen rundlich oder eckig ausgebildeten Querschnitten können durch zumindest abschnittweise vorgesehene Einstanzungen und/oder Umformungen veränderte Geometrien erzielt werden, welche insbesondere bezüglich der Stabilität und/oder Elastizität vorteilhaft sind. Der Begriff Einstanzung bezieht sich insbesondere auf das Herstellungsverfahren eines bestimmten Profils mittels mechanischer, umformender Kraft, wird aber im Folgenden gleichwertig zur Profilierung verwendet. Vorzugsweise verlaufen die Einstanzungen im Wesentlichen länglich entlang der Seite und/oder mehr oder weniger parallel zur Längsachse des Clips. Denkbar sind ferner Zickzack-förmige und/oder bogenförmige Muster insbesondere zur Einstellung einer gewünschten Steifigkeit. Im Besonderen ist der Querschnitt im Bereich mit einer Einstanzung bogenförmig, insbesondere kurvenförmig oder eckig ausgebildet.

In einer ergänzenden oder alternativen Ausführungsform weist mindestens eine Seitenwand ein oder mehrere Profilierungen und/oder Einstanzungen und/oder Verstärkungen. Denkbar ist hier auch eine Verstärkung in Form eines Wulst. Alternativ ist hier eine Einstanzung oder Umformung eines oder mehrerer Abschnitte insbesondere mit flachem Grundkörper denkbar, so dass im Besonderen die Berührungsfläche an einer Cliphalterung und somit die Reibung bei einer Translationsbewegung verringert wird.

In einer weiteren bevorzugten Ausführungsform ist der kopfseitige Bereich der Seite als ein Bandabschnitt ausgeführt. Insbesondere bevorzugt wird diese durch einen gleichgerichteten Bandabschnitt fortgeführt, der Teil des Kopfes bildet. Insbesondere bevorzugt erstreckt sich dieser Bandabschnitt, der Teil des Kopfes bildet, vom Endpunkt des Bandabschnitts, der Teil der Seite bildet, bis zum Ausgangspunkt des Flügels.

Einer dieser beiden, insbesondere beide dieser Bandabschnitte ist insbesondere bevorzugt als Flachband ausgebildet, vorzugsweise mit einem flachen, insbesondere im Wesentlichen rechteckigen Querschnitt oder Querschnittprofil, im Besonderen aus einem Bandblech.

Der den kopfseitigen Bereich der Seite bildende Bandabschnitt ist im montierten Zustand, welche weiter unten genauer erläutert wird, insbesondere bevorzugt zumindest abschnittweise im Bereich einer Öffnung eines Elementes lokalisiert und stellt vorzugsweise eine Verjüngung des Clips dar.

Insbesondere bevorzugt ist einer dieser beiden, insbesondere beide dieser Bandabschnitte im Wesentlichen geradlinig ausgebildet. In bevorzugten Ausführungsformen weist einer dieser beiden, insbesondere beide dieser Bandabschnitt ein oder mehrere Profilierungen und/oder Einstanzungen und/oder Verstärkungen auf.

In einer bevorzugten Ausführungsform verläuft der Bandabschnitt im Wesentlichen parallel zur Längsachse und ist insbesondere im unmontierten Zustand beabstandet zum Bandabschnitt der zweiten Seite. Hierdurch wird insbesondere mehr Spiel und Bewegungsfreiheit für den Clip bei und/oder nach seiner Halterung an einem zweiten Element ermöglicht.

In einer anderen bevorzugten Ausführungsform schließt sich an dem Bandabschnitt im Übergangsbereich zum Flügel ein Abschnitt mit mindestens einem Bogen an, der dessen Scheitel insbesondere bevorzugt den Ausgangspunkt des Flügels bildet. Insbesondere da die Flügel im Wesentlichen von der Längsachse des Clips nach außen fortweisen, weist der Abschnitt im Übergangsbereich vom Bandabschnitt zum Flügel einen Umformung auf, welche vorzugsweise als ein Bogen, im Besonderen mit mehreren Bögen ausgebildet ist. Analog zum Bandabschnitt weist dieser Bogenabschnitt in einer bevorzugten Ausführungsform ein oder mehrere Profilierungen und/oder Einstanzungen und/oder Verstärkungen auf. Vorzugsweise gelten für den Bogenabschnitt gleichsam dieselben Variationsformen bezüglich des Querschnittprofils wie für den Bandabschnitt und/oder das Flügelende.

Soweit im Kontext der Beschreibung von einem "Bandabschnitt" gesprochen wird, so wird dieser Begriff, soweit nichts anderes bestimmt wird, allein zur Beschreibung eines flachen Abschnitts eines Objekts verwendet, wobei durch die Verwendung des Begriffs "Bandabschnitt" ausgedrückt werden soll, dass dieser flache Abschnitt eine Länge und eine Breite aufweist sowie eine Dicke, die deutlich kleiner als die Länge und die Breite ist, insbesondere bevorzugt um die Hälfte, insbesondere bevorzugt um das 5fache, besonders bevorzugt um das 10fache kleiner ist als die Länge und die Breite dieses Abschnitts, wobei die Bezeichnung als "flacher Abschnitt" nicht ausschließt, dass der Abschnitt Profilierungen und/oder Einstanzungen und/oder Verstärkungen aufweist.

Die Verwendung des Begriffs "Bandabschnitt" stellt - soweit nichts anderes ausgeführt wird - keine Materialwahl dar und legt insbesondere nicht fest, dass der flache Abschnitt aus einem Metallband hergestellt sein muss. Der flache Abschnitt kann auch aus nichtmetallischen Materialien hergestellt sein, beispielsweise aus Kunststoff, faserverstärktem Kunststoff oder Gummi.

In einer bevorzugten Ausführungsform ist der Schaft und/oder das Profil der ersten Seite symmetrisch zum Schaft und/oder dem Profil der zweiten Seite, im speziellen sind beide Seiten gegenüberliegend und insbesondere spiegelsymmetrisch zur Längsachse des Clips.

Im Besonderen ist die Spitze, welche aus den Seiten gebildet wird, pyramidenförmig oder kegelförmig oder pyramidenstumpfförmig oder kegelstumpfförmig oder keilförmig zulaufend. Ebenso kann die Spitze durch den First eines dachförmigen Endabschnitts eines sich von dem Kopf zur Spitze hin erstreckenden Schafts ausgebildet werden. In einer bevorzugten Ausführungsform schneidet die Längsachse des Clips die Spitze.

Es sind auch Bauformen denkbar, bei denen der Schaft des Clips zwar ausgehend vom Kopf mit einem ersten Abschnitt der ersten Seite und einem ersten Abschnitt der zweiten Seite beginnt, die sich jeweils in Richtung auf die Spitze erstrecken, dann aber zwischen dem ersten Abschnitt der ersten Seite und den die Spitze bildenden Abschnitten des Clips andere, insbesondere im Verhältnis zu der Erstreckung des ersten Abschnitts der ersten Seite in andere Richtungen weisende Abschnitte des Clips vorgesehen sind, und/oder dann aber zwischen dem ersten Abschnitt der zweiten Seite und den die Spitze bildenden Abschnitten des Clips andere, insbesondere im Verhältnis zu der Erstreckung des ersten Abschnitts der zweiten Seite in andere Richtungen weisende Abschnitte des Clips vorgesehen sind.

In einer bevorzugten Ausführungsform weist die erste Seite zwei aneinandergrenzende, im Winkel zu einander verlaufende Abschnitte auf, und weist die zweite Seite zwei aneinandergrenzende, im Winkel zu einander verlaufende Abschnitte auf, die zusammen mit der Spitze einen im wesentlichen rautenförmigen Querschnitt dieses Bereichs des Clips bilden, wobei die Raute an der der Spitze gegenüberliegenden Seite eine durch den Abstand der ersten Seite zur zweiten Seite definierte Öffnung aufweist. In einer bevorzugten Ausführungsform schließt sich kopfseitig an die an der Bildung der Raute mitwirkenden Abschnitte der jeweiligen Seite der oben im Kontext einer bevorzugten Ausführungsform beschriebene Bandabschnitt im kopfseitigen Bereich der jeweiligen Seite an.

In einer bevorzugten Ausführungsform weist der Clip
- einen Abschnitt der ersten Seite auf, der einen Teil der zuvor beschriebenen, in einer bevorzugten Ausführungsform gebildeten Raute bildet,
- einen Bandabschnitt der ersten Seite, der sich kopfseitig an diesen Abschnitt anschließt,
- einen Bandabschnitt des Kopfes, der sich an diesen Bandabschnitt der ersten Seite anschließt und
- einen Mittelteil des Flügels auf, der über einen Bogen in den Bandabschnitt des Kopfes übergeht,
sowie eine sich zumindest teilweise über diesen Abschnitt der ersten Seite, die beiden Bandabschnitte und zumindest teilweise über den Mittelteil des Flügels erstreckende Profilierung und/oder Einstanzungen und/oder Verstärkung auf.

In einer weiteren Ausführungsform sind der Kopf und die Seiten alle Teil eines einstückigen Elements, das durch das Biegen von Abschnitten eines Metallabschnitts erzeugt wird, insbesondere bevorzugt aus einem bandförmigen Metallabschnitt. Denkbar ist aber auch ein Clip aus Kunststoff oder kunststoffähnlichem Material, welches vorzugsweise elastische Eigenschaften aufweist. Der Clip kann beispielsweise aus faserverstärktem Kunststoff sein. Beispielsweise kann der erfindungsgemäße Clip aus gummielastischem Material, insbesondere aus thermoplastischem Elastomer gefertigt werden. Ferner sind Verbundmaterialien möglich, bei denen sich insbesondere über das Teilverhältnis oder die Orientierung der Materialien die Eigenschaften einstellen lassen. Ferner ist denkbar, das Flügelende aus einem anderen Material zu fertigen, insbesondere einem elastischerem oder auch weniger elastischerem Material, welches mittels fügender oder klemmender oder klebender Verfahren mit dem Clip verbunden werden kann.

Die Erfindung umfasst eine Vorrichtung mit einem ersten Element und einem an dem ersten Element befestigten zweiten Element, wobei das erste Element eine Öffnung aufweist und das zweite Element mittels eines erfindungsgemäßen Clips an dem ersten Element befestigt ist, wobei der Clip die Öffnung derart durchgreift, dass der Kopf des Clips auf einer Seite der Öffnung und die Spitze des Clips auf der gegenüberliegenden Seite des der Öffnung angeordnet ist.

In der erfindungsgemäßen Ausführungsform wird der Clip über die Flügel vorzugsweise klemmend oder rastend in der Öffnung oder Ausnehmung eines Elements gehalten. Zur Montage des Clips wird dieser in die Öffnung oder Ausnehmung eingeführt. Insbesondere werden hierzu die Flügel und/oder die Seiten zum inneren des Clips bewegt. Nach der Einführung der Flügel in die Öffnung oder Ausnehmung spreizen oder bewegen sich die Flügel und/oder Seiten selbsttätig auseinander.

In einer bevorzugten Ausführungsform weisen die Flügel ein oder mehrere Abstützflächen an den Flügelenden auf, welche im Wesentlichen parallel zur Längsachse des Clips und/oder senkrecht zur Hauptebene des ersten und/oder des zweiten Elementes verlaufen. Insbesondere sind die Abstützflächen im Wesentlichen flächenhaft ausgebildet, welche den Clip stabilisieren, aber dennoch vorzugsweise eine Translation des Clips senkrecht zur Längsachse des Clips und insbesondere in einer definierten Bewegungsrichtung in seiner Cliphalterung zulassen, im Besonderen bis zu den Wandungen der Cliphalterung, welche im Wesentlichen parallel zur Abstützfläche verlaufen.

In einer bevorzugten Ausführungsform schließt sich die Öffnung an ein Sackloch des ersten Elements an. Als Sackloch wird typischerweise eine Bohrung oder Ausnehmung bezeichnet, die das Werkstück nicht vollständig durchdringt wie eine Durchgangsbohrung, also eine bestimmte Tiefe hat. Ferner kann ein Sackloch einen schmaleren Öffnungsquerschnitt aufweisen als der darunter, tiefer liegende Bereich. Im Speziellen weist der tiefer liegende Bereich unter der Öffnung eine Grundform auf, welche im Wesentlichen einen rechteckförmigen Querschnitt hat.

In einer bevorzugten Ausführungsform wird Sackloch zumindest teilweise durch eine Begrenzungsfläche begrenzt, die ein Profil aus Ausnehmungen und/oder Vorsprüngen entlang einer Verschieberichtung des Clips aufweist, wobei die Verschieberichtung in einem Winkel zur Längsachse des Clips verläuft. Der Winkel ist insbesondere bevorzugt größer 45° und ist insbesondere bevorzugt gleich 90°. Die am ersten Element vorgesehene Cliphalterung mit einem Sackloch weist insbesondere bevorzugt an den Ebenen senkrecht zur Längsachse des Clips und/oder entlang der Verschieberichtung ein Profil von Ausnehmungen und Vorsprüngen auf, welches derart ausgebildet ist, dass es eine verbesserte selbsttätige Zentrierung bei gleichzeitig schwimmender Lagerung und/oder schwimmendem Sitz des Clips in der Cliphalterung erlaubt. Schwimmend bezeichnet insbesondere, dass die Cliphalterung in einer oder mehreren Raumrichtungen und/oder Raumwinkeln definierte Freiheitsgrade für den Clip aufweist. Im Besonderen erlaubt die Cliphalterung im Vergleich zu den anderen Freiheitsgraden eine relativ große Translation senkrecht zur Längsachse des Clips.

Denkbar ist auch ein Profil entlang der Verschieberichtung, welches kurvenförmig ausgebildet ist, insbesondere derart, dass im zusammengedrückten Zustand des Clips eine Bewegung insbesondere in Längsrichtung des Clips eingeschränkt wird. Insbesondere vor, im Besonderen während der Montage des ersten Elements kann die vormals beschriebene Ausweichbewegung idealerweise im vollem Umfang durchgeführt werden, da die Seiten und/oder Flügel unter Anwendung einer externen Kraft gegen die Rückstellkraft des Clips zueinander bewegt werden und somit der Abstand der Flügelenden mit den Abstützfläche verkürzt wird. Dies erlaubt insbesondere bei der Montage als auch Demontage eine Erhöhung der Knicksteifigkeit als auch eine Erhöhung der Toleranzen bei der Positionierung der Elemente zur Montage.

In einer weiteren bevorzugten Ausführungsform wird die Distanz der Abstützflächen erhöht unter Anwendung von Kräften zur Demontage, deren Kraftvektoren insbesondere parallel zur Längsachse des Clips verlaufen. Hierdurch weist die Vorrichtung in diesem Fall eine höhere Halte- und somit Demontagekraft auf bei gleichzeitig verbesserter Selbstzentrierungseigenschaft, da die Abstützflächen der Flügelenden an die seitlichen Begrenzungen der Cliphalterung stoßen und/oder sich von ihnen abdrücken und somit den Clip in der Cliphalterung stabilisieren. Die Ausnehmungen und/oder Vorsprünge der Cliphalterung sind derart ausgebildet, dass der Clip bei einer Bewegung aus seiner Sollposition eine erhöhte Rückstellkraft in seine Sollposition aufweist. Denkbar ist hier bspw. eine zentrierte Stufe und/oder ein oder mehrere im speziellen abgestufte Vorsprünge und/oder eine Profil in Form eines Sinusmusters oder wellenartiger Form, welches im Besonderen symmetrisch zum Zentrum der Öffnung des Sacklochs ausgebildet ist.

In einer weiteren Ausführungsform ist die Abstützfläche im Wesentlichen komplementär ausgebildet zur abstützenden Fläche an der Cliphalterung, welche in einem späteren Abschnitt genauer beschreiben wird und vorzugsweise in Form eines Sacklochs ausgebildet ist.

In einer bevorzugten Ausführungsform ist der Abschnitt der Seite, der weiter von der Längsachse entfernt ist als ein anderer Abschnitt dieser Seite, näher zur Spitze angeordnet ist, als der andere Abschnitt und dass die Seite zwischen dem Abschnitt, der weiter von der Längsachse entfernt ist als ein anderer Abschnitt dieser Seite und diesem anderen Abschnitt einen Übergangsabschnitt aufweist, in dem sich die Seite mit zunehmender Annäherung an den Abschnitt, der weiter von Längsachse entfernt ist als ein anderer Abschnitt dieser Seite, zunehmend mehr von der Längsachse entfernt. In einer bevorzugten Ausführungsform ist die Seite im Anschluss an den Bereich, der weiter von der Längsachse entfernt ist, in Richtung auf die Spitze so ausgeführt, dass sie von dem Bereich, der weiter von der Längsachse entfernt ist, in Richtung auf die Spitze wieder auf die Längsachse zuläuft. Wenn die Seite des Clips aus elastischem Material ausgeführt ist, kann diese Formgebung der Seite des Clips dazu führen, dass beim Einführen des Clips in eine Öffnung, deren Radius kleiner ist, als der Abstand des Bereichs, der weiter von der Längsachse entfernt ist, von der Längsachse des Clips, der Bereich, der weiter von der Längsachse entfernt ist, durch den Kontakt mit der Wandung der Öffnung in Richtung auf die Längsachse gedrückt wird und nachdem der Bereich, der weiter von der Längsachse entfernt ist, die Öffnung passiert hat, aufgrund der Rückstellkraft des elastischen Materials wieder in eine Stellung weiter von der Längsachse entfernt zurückfedert.

In einer bevorzugten Ausführungsform weist das zweite Element eine als zweite Öffnung bezeichnete Öffnung auf. Insbesondere bevorzugt ist ein Teil der die zweite Öffnung begrenzenden Wandung oder eine Kante, die den Übergang der Wandung der Öffnung zu einer anders ausgerichteten Fläche des zweiten Elements bildet, im Kontakt mit dem Übergangsabschnitt der Seite. Dadurch wird es möglich, das zweite Element an dem ersten Element zu halten, in dem sich der Clip mit einer der Spitze zugewandten Kontaktlinie, bzw. Kontaktfläche an seinem Kopf, die insbesondere bevorzugt durch den Übergang von einem Mittelteil des Flügels zu der Abstützfläche gebildet wird, an einer von der Spitze fortweisenden Oberfläche des ersten Elements abstützt und die zweite Öffnung des zweiten Elements durchgreift und sich der Bereich, der weiter von der Längsachse entfernt ist, auf der anderen Seite des zweiten Elements angeordnet ist, als der Kopf des Clips. Dadurch kommt ein Teil der die zweite Öffnung begrenzenden Wandung oder eine Kante, die den Übergang der Wandung der Öffnung zu einer anders ausgerichteten Fläche des zweiten Elements bildet, in Kontakt mit dem Übergangsabschnitt der Seite. Insbesondere bevorzugt durchgreift der Clip dabei auch eine Öffnung des ersten Elements. Es ist offensichtlich, dass durch die Wahl der Lage der Kontaktlinie, bzw. Kontaktfläche am Kopf des Clips und die Wahl der Lage des Bereichs, der weiter von der Längsachse entfernt ist, sowie durch die Gestaltung des Übergangsbereichs der Seite der Clip auf die Materialstärke des ersten Elements und die Materialstärke des zweiten Elements in Richtung der Längsachse des Clips abgestimmt werden kann, so dass der Clip das erste Element und das zweite Element klemmend zwischen der der Spitze zugewandten Kontaktlinie, bzw. Kontaktfläche an seinem Kopf und dem mit einem Teil der die zweite Öffnung begrenzenden Wandung oder eine Kante, die den Übergang der Wandung der Öffnung zu einer anders ausgerichteten Fläche des zweiten Elements bildet, in Kontakt kommendem Übergangsabschnitt halten kann. Durch die Materialwahl der Seite, insbesondere durch die Wahl die Elastizität der Seite, die bestimmt, wie stark die Seite nach Durchschieben durch die Öffnung des zweiten Elements zurückfedert, kann die Klemmkraft eingestellt werden. Ferner kann durch diese Bauform ein Toleranzausgleich geschaffen werden, falls die Öffnung des zweiten Elements aufgrund von Herstellungsbedingten Materialabweichung nicht stets die gleiche Größe aufweist. Ferner kann durch die Materialwahl die Kraft eingestellt werden, die notwendig ist, um den Clip zurück durch die Öffnung des zweiten Elements zu ziehen (die Spitze des Clips wieder durch die Öffnung des zweiten Elements zu ziehen). Diese Ausführungsform bietet insbesondere bei symmetrischer Ausführung der Seiten, insbesondere bevorzugt bei spiegelsymmetrischer Ausführung der Seiten bezüglich einer Ebene, die die Längsachse des Clips enthält, Vorteile.

In einer bevorzugten Ausführungsform weist der Flügel zwischen der am Flügelende vorgesehenen Abstützfläche und einem Ausgangspunkt des Flügels einen Mittelteil aufweist, wobei der Mittelteil durch Abschnitte des Clips gebildet wird, deren Erstreckung eine Komponente in Richtung senkrecht zur Längsachse des Clips und eine Komponente parallel zur Längsachse des Clips haben und sich der Mittelteil des Flügels von dem Ausgangspunkt bis zu einer am Übergang vom Mittelteil zur Abstützfläche vorgesehenen Kontaktlinie oder Kontaktfläche des Flügels und damit des Kopfes erstreckt, wobei die Kontaktlinie oder Kontaktfläche in Kontakt mit einer Oberfläche des Sacklochs steht, und der Ausgangspunkt des Flügels beabstandet zur Kontaktlinie, bzw. Kontaktfläche des Flügels und weiter entfernt von der Spitze des Clips angeordnet, als die Kontaktlinie, bzw. die Kontaktfläche und am Ausgangspunkt des Flügels eine weitere Kontaktlinie oder Kontaktfläche vorgesehen ist, die mit einer anderen Oberfläche des Sacklochs in Kontakt steht. Insbesondere bevorzugt weist das Sackloch eine senkrecht zur Längsachse des Clips verlaufende Begrenzungsfläche auf, mit der die am Übergang vom Mittelteil zur Abstützfläche vorgesehene Kontaktlinie oder Kontaktfläche des Flügels in Kontakt steht. Die am Ausgangspunkt des Flügels vorgesehene weitere Kontaktlinie oder Kontaktfläche steht insbesondere bevorzugt mit einer Begrenzungsfläche des Sacklochs im Kontakt, die ein Profil aus Ausnehmungen und/oder Vorsprüngen entlang einer Verschieberichtung des Clips aufweist, wobei die Verschieberichtung in einem Winkel zur Längsachse des Clips verläuft.

In einer bevorzugten Ausführungsform ist die Oberfläche des Sacklochs, mit der die am Übergang vom Mittelteil zur Abstützfläche vorgesehene Kontaktlinie oder Kontaktfläche des Flügels in Kontakt steht, der anderen Oberfläche des Sacklochs, mit der die am Ausgangspunkt des Flügels vorgesehen weitere Kontaktlinie oder Kontaktfläche in Kontakt steht, zugewandt und verläuft insbesondere bevorzugt parallel zu der der anderen Oberfläche des Sacklochs, mit der die am Ausgangspunkt des Flügels vorgesehen weitere Kontaktlinie oder Kontaktfläche in Kontakt steht,

Diese Ausführungsform bietet insbesondere bei symmetrischer Ausführung der Seiten, insbesondere bevorzugt bei spiegelsymmetrischer Ausführung der Seiten bezüglich einer Ebene, die die Längsachse des Clips enthält, Vorteile.

In einer bevorzugten Ausführungsform weist das Sackloch als tiefer liegender Bereich unter der Öffnung eine Grundform auf, welche im Wesentlichen einen rechteckförmigen Querschnitt hat. Bei einer solchen Bauform kann die Oberfläche des Sacklochs, mit der die am Übergang vom Mittelteil zur Abstützfläche vorgesehene Kontaktlinie oder Kontaktfläche des Flügels in Kontakt steht, durch eine erste Oberfläche des Rechtecks gebildet werden und die anderen Oberfläche des Sacklochs, mit der die am Ausgangspunkt des Flügels vorgesehen weitere Kontaktlinie oder Kontaktfläche in Kontakt steht, durch eine andere Oberfläche des Rechtecks.

In einer bevorzugten Ausführungsform ist die Erstreckung der Abstützfläche in Richtung parallel zur Längsachse des Clips um mehr als 0,1mm kleiner, insbesondere bevorzugt um mehr als 0,5mm kleiner und ganz besonders bevorzugt um mehr als 1mm kleiner als die in Richtung parallel zur Längsachse gemessene Höhe des Sacklochs in dem Bereich, in dem sich die Abstützfläche befindet. Auf diese Weise wird ein Spiel erzeugt, das verhindert, dass das freie Ende der Abstützfläche an einer Begrenzungsfläche des Sacklochs kratzt.

In einer bevorzugten Ausführungsform weist das Sackloch zwei gegenüberliegende, parallel zur Längsachse verlaufende Begrenzungswände auf. In einer bevorzugten Ausführungsform liegt jeweils eine Abstützflächen eines Flügel im eingebauten Zustand des Clips an jeweils einer der zwei gegenüberliegenden, parallel zur Längsachse verlaufenden Begrenzungswände an.

Insbesondere bevorzugt wird der erfindungsgemäße Clip dazu verwendet, ein Abdeckung an einem Karosserieteil eines Fahrzeugs zu befestigen, insbesondere bevorzugt, um eine Abdeckung an einer A-, B- oder C-Säule einer Karosserie eines Fahrzeugs zu befestigen.

Nachfolgend wird die Erfindung anhand von Ausführungsbeispiele der Erfindung näher darstellenden Zeichnungen erläutert. Darin zeigen
- Fig. 1:: eine Seitenansicht senkrecht zur Längsachse des erfindungsgemäßen Clips.
- Fig. 2:: eine Seitenansicht senkrecht zur Längsachse des erfindungsgemäßen Clips mit im Vergleich zu Fig. 1 um 90 Grad (oder 270 Grad) um die Längsachse gedrehten Clip.
- Fig. 3:: eine Seitenansicht senkrecht zur Längsachse des erfindungsgemäßen Clips mit zusammengedrückten Seiten und/oder zusammengedrückten Flügeln.
- Fig. 4:: eine Schnittansicht durch die erfindungsgemäße Vorrichtung senkrecht zur Längsachse des erfindungsgemäßen Clips mit montiertem erstem Element und montiertem zweitem Element.
- Fig. 5:: eine Schnittansicht durch die erfindungsgemäße Vorrichtung senkrecht zur Längsachse des erfindungsgemäßen Clips im montierten Zustand mit vom ersten Element wegweisender Kraftbelastung des zweiten Elements.
- Fig. 6:: eine Schnittansicht durch die erfindungsgemäße Vorrichtung senkrecht zur Längsachse des erfindungsgemäßen Clips im montierten Zustand mit Kraftbelastung des zweiten Elements senkrecht zur Längsachse des Clips.

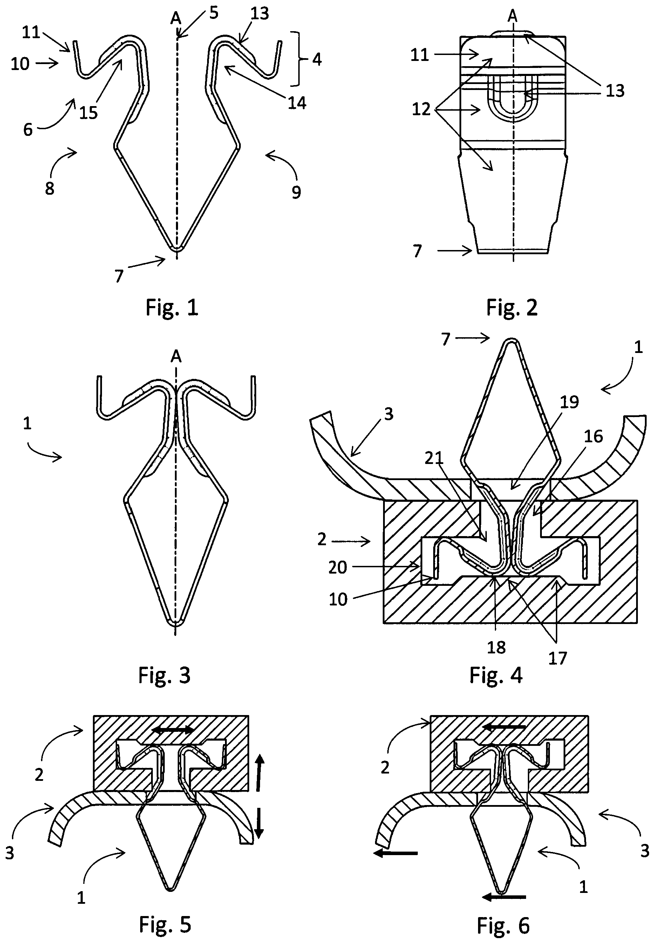

Der in der Fig. 1 in Seitenansichten senkrecht zur Längsachse 5 dargestellte Clip zum Befestigen eines ersten Elements an einem zweiten Element weist einen Kopf 4 und eine Spitze 7 auf. Zwischen dem Kopf 4 und der Spitze 7 erstrecken sich aus mehreren, insbesondere gebogenen Teilabschnitten zusammengesetzte Seiten 8,9, welche einen Schaft bilden.

Der Schaft weist eine erste Seite 8 und eine der ersten Seite 8, bezogen auf eine Ebene, die die Längsachse 5 des Clips enthält, spiegelsymmetrisch gegenüberliegend angeordnete zweite Seite 9 auf. Bei der dargestellten Ausführungsform weist die Spitze 7 zusammen mit Teilen der Spitze eine pyramidenförmige oder kegelförmige oder pyramidenstumpfförmige oder kegelstumpfförmige oder keilförmige zulaufende Gestalt auf. Sowohl die erste Seite 8 als auch die zweite Seite 9 erstrecken sich von dem Kopf 4 in Richtung auf die Spitze 7, welche die beiden Seiten 8,9 verbindet. Die Spitze 7 weist einen bogenförmigen Biegeabschnitt auf, der ausgehend von der ersten Seite 8 nach innen gebogen ist. Der Scheitel des Bogens dieses Biegeabschnitts bildet insbesondere den wesentlichen Teil der Spitze 7. Woran sich ebenfalls die zweite Seite 9 anschließt. Kopfseitig endet die zweite Seite 9 als auch die erste Seite 8 in einem teils bogenförmigen Biegeabschnitt, der nach außen gebogen ist, bevor die jeweiligen Seiten 8 und 9 in den Bandabschnitt 14 übergehen. Der Bandabschnitt 14 ist im Wesentlichen flach im Querschnitt und insbesondere geradlinig oder etwas kurvenförmig ausgebildet.

An den Bandabschnitt 14 schließt sich ein weiterer Bogenabschnitt mit einem Bogen 15 an, welcher von der Längsachse des Clips nach außen weist und insbesondere den Ausgangspunkt des Flügels 6 darstellt. Der Flügel 6 erstreckt sich in einem insbesondere kurvenförmigen Abschnitt (Mittelteil) bis zum Flügelende 10, an dem sich eine Abstützfläche 11 befindet. Mit Flügelende10 wird hier insbesondere der flach ausgebildete Endbereich bezeichnet, welcher einen im Wesentlichen geradlinigen Verlauf aufweist und sich nach einem Bogenabschnitt anschließt, der den Übergang zwischen dem Mittelteil des Flügels und der Abstützfläche bildet und eine Kontaktlinie zum Kontakt mit einem der beiden zu verbindenden Bauteile bildet.

Im Besonderen ist die Abstützfläche 11 im Wesentlichen parallel zur Längsachse 5 des Clips oder weist einen Winkel von kleiner 45° zur Längsachse 5 auf. Die Winkelstellung ist insbesondere auch abhängig vom Belastungszustand des Clips. Bei dem gezeigten Clip verringert sich beispielsweise der Winkel zur Längsachse 5 bei einer Krafteinwirkung wegweisend vom Kopf 4 und parallel zur Längsachse 5. Im Speziellen ist auch das Flügelende 10 kurvenförmig ausgebildet. Im Bereich des Kopfes 4 befinden sich zumindest abschnittweise Profilierungen und oder Einstanzungen 13 und/oder Verstärkungen, mit denen insbesondere eine gezielte Biegefestigkeit erzielt werden kann. Ferner reduzieren die Einstandzungen13 die Reibung an Kontaktflächen während und nach der Montage. Die Einstanzungen an dem Clip in Fig. 1 sind insbesondere am kopfseitigen Bereich der Seiten 8,9, am Bandabschnitt 14, am Bogen 15 sowie am Mittelteil des Flügels 6 vorgesehen.

Der erfindungsgemäße Clip in der in den Figuren dargestellten Ausführungsform ist ein einstückiges Element und wurde durch Biegen von Abschnitten eines Metallabschnitts erzeugt, im Besonderen einem Blechband.

In dem in den Fig. dargestellten Ausführungsbeispiel weisen die erste Seite 8 und die zweite Seite 9 jeweils einen flachen Grundkörper auf. In der Fig. 1 und 2 ist zu erkennen, dass der ansonsten flache Grundkörper Erhebungen insbesondere durch Einstanzungen aufweist. Dies verdeutlicht, dass im Rahmen dieser Beschreibung verwendete Verständnis des Begriffs "flacher Grundkörper" nur in einer besonders bevorzugten Ausführungsform einen geometrisch exakt flachen Grundkörper vorsieht, aber in anderen Ausführungsformen - wie hier - auch solche Grundkörper als "flache Grundkörper" bezeichnet, die aufgrund kleiner Vorsprünge von einer geometrisch exakt flachen Form abweichen.

Figur 2 zeigt eine Seitenansicht senkrecht zur Längsachse des erfindungsgemäßen Clips mit im Vergleich zu Fig. 1 um 90 Grad oder 270 Grad um die Längsachse gedrehten Clip. Der flache Grundkörper bzw. die Seitenwand verjüngt sich in Richtung zur Spitze 7 hin. Kopfseitig sind die Einstanzungen 13 erkennbar.

Figur 3 zeigt eine Seitenansicht senkrecht zur Längsachse des erfindungsgemäßen Clips mit zusammengedrückten Seiten und oder zusammengedrückten Flügeln. Durch äußere Krafteinwirkung werden typischerweise die Bandabschnitte 14 in Kontakt gebracht und anschließend in die Öffnung eines Elementes 2 eingeführt.

Figur 4 zeigt eine erfindungsgemäße Vorrichtung in einer Schnittansicht des Clips mit dem ersten Element 2 und einem an dem ersten Element 2 befestigten zweiten Element 3, wobei das erste Element 2 eine Öffnung aufweist und das zweite Element 3 mittels des Clips an dem ersten Element 2 befestigt ist. Der Clip durchgreift die Öffnung 16 derart, dass der Kopf 4 des Clips auf einer Seite der Öffnung 16 und die Spitze 7 des Clips auf der gegenüberliegenden Seite der Öffnung 16 des ersten Elements 2 angeordnet ist. Die Seiten 8,9 sind in Kontakt mit dem zweiten Element, welches insbesondere klemmend gehalten wird. Der Clip befindet sich in einem weitestgehend, aber noch nicht final montierten Zustand. Die Bandabschnitte 14 sind angenähert und der Clip ist zentriert in der Öffnung 16, welche sich an ein Sackloch 21 anschließt. Ferner ist ein Stufenprofil 17 auf der unteren Auflagefläche 18 für den Clip in dem Sackloch 21 erkennbar, welches zentriert zur Öffnung 16 ist und den Clip in einer vorzugsweise festen Position im montierten Zustand hält. In den Randbereichen des länglich ausgebildeten Sacklochs 21 weist die Vorrichtung mehr Freiheitsgrade für die Bewegung des Kopfes des Clips auf, sodass das Flügelende 10 weniger Reibung erfährt und insbesondere bei der Montage seitliche Translationsbewegungen ausführen kann.

Die elastisch zusammendrückbaren Flügelenden 10 weisen im Speziellen eine Abschrägung auf, die bewirkt, dass wenn der Clip in ein Loch eines ersten Elements 2 eingeführt wird, diese mit dem Rand des Lochs in Kontakt kommt und durch das weitere Einschieben des Clips entgegen einer Federkraft nach innen gedrückt wird, aber nach Durchschreiten der Öffnung 16 in dem ersten Element aufgrund der Federkraft wieder nach außen federt und dadurch das die Öffnung 16 umgebende Material des ersten Elements 2 hintergreift.

Ein gleichartiger Mechanismus ist für das Anbringen des zweiten Elementes vorgesehen, wobei die kegelstumpfförmigen Seiten 8,9 durch das Aufschieben eines zweiten Elementes 3 mit einer weiteren Öffnung 19 selbsttätig zur Längsachse 5 des Clips zusammengedrückt werden.

Fig. 5 zeigt eine Schnittansicht senkrecht zur Längsachse des erfindungsgemäßen Clips im montierten Zustand mit einer vom ersten Element 2 wegweisender Kraftbelastung des zweiten Elements 3. Erkennbar ist ein Spreizen der Flügel, wobei die Abstützflächen 11 an die Seitenfläche 20 des Sacklochs 21 anstoßen. Ferner sind die beiden Bandabschnitte am Kopf 4 voneinander weiter beabstandet als im unbelasteten Zustand. Durch die durch die externe Kraft induzierten Deformierungen des Clips stabilisiert und zentriert sich der Clip selbsttätig, insbesondere durch die Rückstellkraft der Flügelenden 10 und/oder der mit den Elementen 2,3 teils oder ganz in Kontakt stehenden Seiten.

Fig. 6 zeigt ebenfalls eine Schnittansicht senkrecht zur Längsachse 5 des erfindungsgemäßen Clips im montierten Zustand, jedoch mit seitlicher Kraftbelastung des zweiten Elements 3 senkrecht zur Längsachse 5 des Clips. Hier ist erkennbar, dass eine Abstützfläche 11 die Translation des Clips im Sackloch 21 einseitig begrenzt und die Abstützfläche 11 mit der Seitenfläche 20 des Sacklochs 21 in Kontakt steht, im Besonderen bündig mit ihr abschließt. Die Bandabschnitte 14 sind einander angenähert und das zweite Element 3 ist seitlich entlang des eingezeichneten Kraftvektors relativ zum Element 2 verschoben. Die Vorrichtung erlaubt somit eine eingeschränkte, reversible Translationsbewegung beider Elemente relativ zueinander insbesondere unter einer Krafteinwirkung senkrecht zur Längsachse 5.

### Bezeichnungen:

- 1.: Clip
- 2.: Erstes Element
- 3.: Zweites Element
- 4.: Kopf
- 5.: Längsachse
- 6.: Flügel
- 7.: Spitze
- 8.: Erste Seite
- 9.: Zweite Seite
- 10.: Flügelende
- 11.: Abstützfläche
- 12.: Seitenwand
- 13.: Einstanzungen
- 14.: Bandabschnitt
- 15.: Bogen
- 16.: Öffnung
- 17.: Profil
- 18.: Auflagefläche
- 19.: Zweite Öffnung
- 20.: Seitenfläche
- 21.: Sackloch

## Patentansprüche

1. Vorrichtung mit einem Clip (1), einem ersten Element (2) und einem an dem ersten Element (2) befestigten zweiten Element (3), wobei das erste Element (2) eine Öffnung (16) aufweist und das zweite Element (3) mittels des Clips (1) an dem ersten Element (2) befestigt ist, wobei der Clip (1)
• einen Kopf (4) mit zwei sich in Richtung senkrecht zur Längsachse (5) des Clips (1) voneinander erstreckenden Flügeln (6) und eine Spitze (7) und
• eine erste Seite (8) und eine zweite Seite (9) aufweist, wobei sich die erste Seite (8) und die zweite Seite (9) von dem Kopf (4) in Richtung der Längsachse (5) des Clips (1) auf die Spitze (7) zu erstrecken,
• wobei die erste Seite (8) und die zweite Seite (9) über die Spitze (7) miteinander verbunden sind und so zusammendrückbar sind, dass sie um die Spitze (7) aufeinander zu geschwenkt werden können,
• wobei zumindest eine Seite (8,9) einen Abschnitt aufweist, der weiter von der Längsachse (5) entfernt ist als ein anderer Abschnitt dieser Seite (8,9), und der Clip (1) die Öffnung (16) derart durchgreift, dass der Kopf (4) des Clips (1) auf einer Seite der Öffnung (16) und die Spitze (7) des Clips (1) auf der gegenüberliegenden Seite der Öffnung (16) angeordnet ist, **dadurch gekennzeichnet, dass** mindestens ein Flügel (6) am Flügelende (10) eine Abstützfläche (11) für das erste Element (2) aufweist, welche zumindest abschnittweise in einem Winkel von weniger als 45 Grad zur Längsachse (5) des Clips (1) verläuft.

2. Vorrichtung nach Anspruch 1, **dadurch gekennzeichnet, dass** mindestens eine Seite (8,9) des Clips (1) eine Seitenwand (12) aufweist, wobei die Seitenwand (12) ein oder mehrere Profilierungen und/oder Einstanzungen (13) und/oder Verstärkungen in dem an den Kopf (4) angrenzenden Bereich aufweist.

3. Vorrichtung nach einem der Ansprüche 1 bis 2, **dadurch gekennzeichnet, dass** sich kopfseitig an die Seite (8,9) des Clips (1) ein Bandabschnitt (14) anschließt.

4. Vorrichtung nach Anspruch 3, **dadurch gekennzeichnet, dass** sich an dem Bandabschnitt (14) des Clips (1) im Übergangsbereich zum Flügel (10) ein Abschnitt mit mindestens einem Bogen (15) anschließt.

5. Vorrichtung nach einem der Ansprüche 1 bis 4, **dadurch gekennzeichnet, dass** der Clip (1) bezüglich einer Ebene, die die Längsachse (5) des Clips (1) enthält, spiegelsymmetrisch ausgebildet ist.

6. Vorrichtung nach einem der Ansprüche 1 bis 5, **dadurch gekennzeichnet, dass** der Kopf und die erste Seite und die zweite Seite des Clips (1) Teil eines einstückigen Elements sind, welches durch das Biegen von Abschnitten eines Metallabschnitts erzeugt wurde.

7. Vorrichtung nach einem der Ansprüche 1 bis 6, **dadurch gekennzeichnet, dass** der Abschnitt der Seite (8,9), der weiter von der Längsachse (5) entfernt ist als ein anderer Abschnitt dieser Seite (8,9), näher zur Spitze (7) angeordnet ist, als der andere Abschnitt und dass die Seite (8,9) zwischen dem Abschnitt, der weiter von der Längsachse (5) entfernt ist als ein anderer Abschnitt dieser Seite (8,9) und diesem anderen Abschnitt einen Übergangsabschnitt aufweist, in dem sich die Seite (8,9) mit zunehmender Annäherung an den Abschnitt, der weiter von Längsachse (5) entfernt ist als ein anderer Abschnitt dieser Seite (8,9), zunehmend mehr von der Längsachse (5) entfernt.

8. Vorrichtung nach Anspruch 7, **dadurch gekennzeichnet, dass** das zweite Element (2) eine als zweite Öffnung (19) bezeichnete Öffnung aufweist und ein Teil der die zweite Öffnung (19) begrenzenden Wandung eine Kante, die den Übergang der Wandung der Öffnung zu einer anders ausgerichteten Fläche des zweiten Elements bildet, im Kontakt mit dem Übergangsabschnitt der Seite (8,9) ist.

9. Vorrichtung nach einem der Ansprüche 1 bis 8, **dadurch gekennzeichnet, dass** sich an die Öffnung (16) des ersten Elements (2) ein Sackloch (21) anschließt.

10. Vorrichtung nach Anspruch 9, **dadurch gekennzeichnet, dass** das Sackloch (21) zumindest teilweise durch eine Begrenzungsfläche begrenzt wird, die ein Profil (17) aus Ausnehmungen und/oder Vorsprüngen entlang einer Verschieberichtung des Clips (1) aufweist, wobei die Verschieberichtung in einem Winkel zur Längsachse (5) des Clips (1) verläuft.

11. Vorrichtung nach Anspruch 10, **dadurch gekennzeichnet, dass** das Profil (17) des Sacklochs (21) entlang der Verschieberichtung kurvenförmig ausgebildet ist.

12. Vorrichtung nach Anspruch 10 oder 11, **dadurch gekennzeichnet, dass** die Ausnehmungen und/oder Vorsprünge des Sacklochs (21) derart ausgebildet sind, dass sie mit Vorsprüngen und/oder Ausnehmungen am Kopf des Clips (1) zusammenwirken, so dass der Clip (1) selbsttätig in dem Sackloch (21) zentriert wird.

13. Vorrichtung nach einem der Ansprüche 9 bis 12, **dadurch gekennzeichnet, dass** der Flügel (6) zwischen der am Flügelende vorgesehenen Abstützfläche (11) und einem Ausgangspunkt des Flügels (6) einen Mittelteil aufweist, wobei der Mittelteil durch Abschnitte des Clips (1) gebildet wird, deren Erstreckung eine Komponente in Richtung senkrecht zur Längsachse (5) des Clips (1) und eine Komponente parallel zur Längsachse (5) des Clips (1) haben und sich der Mittelteil des Flügels (6) von dem Ausgangspunkt bis zu einer am Übergang vom Mittelteil zur Abstützfläche (11) vorgesehenen Kontaktlinie oder Kontaktfläche des Flügels (6) und damit des Kopfes erstreckt, wobei die Kontaktlinie oder Kontaktfläche in Kontakt mit einer Oberfläche des Sacklochs (21) steht, und der Ausgangspunkt des Flügels (6) beabstandet zur Kontaktlinie, bzw. Kontaktfläche des Flügels und weiter entfernt von der Spitze des Clips (1) angeordnet, als die Kontaktlinie, bzw. die Kontaktfläche und am Ausgangspunkt des Flügels (6) eine weitere Kontaktlinie oder Kontaktfläche vorgesehen ist, die mit einer anderen Oberfläche des Sacklochs (21) in Kontakt steht.

14. Vorrichtung nach einem der Ansprüche 8 bis 13, **dadurch gekennzeichnet, dass** die Erstreckung der Abstützfläche (11) in Richtung parallel zur Längsachse (5) des Clips (1) um mehr als 0,1mm kleiner ist, als die in Richtung parallel zur Längsachse (5) gemessene Höhe des Sacklochs (21) in dem Bereich, in dem sich die Abstützfläche (11) befindet.

15. Verwendung eines Clips (1) mit einem ersten Element (2) und einem zweiten Element (3), wobei das erste Element (2) eine Öffnung (16) aufweist und der Clip (1) dazu verwendet wird, das zweite Element (3) an dem ersten Element (2) zu befestigen, wobei der Clip (1)
• einen Kopf (4) mit zwei sich in Richtung senkrecht zur Längsachse (5) des Clips (1) voneinander erstreckenden Flügeln (6) und eine Spitze (7) und
• eine erste Seite (8) und eine zweite Seite (9) aufweist, wobei sich die erste Seite (8) und die zweite Seite (9) von dem Kopf (4) in Richtung der Längsachse (5) des Clips (1) auf die Spitze (7) zu erstrecken,
• wobei die erste Seite (8) und die zweite Seite (9) über die Spitze (7) miteinander verbunden sind und so zusammendrückbar sind, dass sie um die Spitze (7) aufeinander zu geschwenkt werden können,
• wobei zumindest eine Seite (8,9) einen Abschnitt aufweist, der weiter von der Längsachse (5) entfernt ist als ein anderer Abschnitt dieser Seite (8,9), und der Clip (1) die Öffnung (16) derart durchgreift, dass der Kopf (4) des Clips (1) auf einer Seite der Öffnung (16) und die Spitze (7) des Clips (1) auf der gegenüberliegenden Seite der Öffnung (16) angeordnet ist, **dadurch gekennzeichnet, dass** mindestens ein Flügel (6) am Flügelende (10) eine Abstützfläche (11) für das erste Element (2) aufweist, welche zumindest abschnittweise in einem Winkel von weniger als 45 Grad zur Längsachse (5) des Clips (1) verläuft.

## Claims

1. Device having a clip (1), a first element (2) and a second element (3) fastened to the first element (2), wherein the first element (2) has an opening (16) and the second element (3) is fastened to the first element (2) by means of the clip (1), wherein the clip (1) has
• a head (4) having two wings (6) extending from each other in the direction perpendicular to the longitudinal axis (5) of the clip (1) and a tip (7) and
• a first side (8) and a second side (9), wherein the first side (8) and the second side (9) extend from the head (4) to the tip (7) in the direction of the longitudinal axis (5) of the clip (1),
• wherein the first side (8) and the second side (9) are connected to one another via the tip (7) and can be compressed such that they can be pivoted towards one other about the tip (7),
• wherein at least one side (8,9) has a section which is further away from the longitudinal axis (5) than another section of this side (8,9),
and the clip (1) passes through the opening (16) in such a manner that the head (4) of the clip (1) is arranged on one side of the opening (16) and the tip (7) of the clip (1) is arranged on the opposite side of the opening (16), **characterized in that** at least one wing (6) has at the wing end (10) a supporting surface (11) for the first element (2) which runs at least in sections at an angle of less than 45 degrees to the longitudinal axis (5) of the clip (1).

2. Device according to Claim 1, **characterized in that** at least one side (8,9) of the clip (1) has a side wall (12), wherein the side wall (12) has one or more profiles and/or punched depressions (13) and/or reinforcements in the region adjacent to the head (4).

3. Device according to one of Claims 1 to 2, **characterized in that** a band section (14) is connected to the side (8,9) of the clip (1) on the head side.

4. Device according to Claim **3, characterized in that** a section with at least one arc (15) is connected to the band section (14) of the clip (1) in the transitional region to the wing (10).

5. Device according to one of Claims 1 to 4, **characterized in that** the clip (1) has a mirror-symmetrical design with respect to a plane which contains the longitudinal axis (5) of the clip (1).

6. Device according to one of Claims 1 to 5, **characterized in that** the head and the first side and the second side of the clip (1) are part of a one-piece element produced by bending sections of a metal section.

7. Device according to one of Claims 1 to 6, **characterized in that** the section of the side (8,9) which is further away from the longitudinal axis (5) than another section of this side (8,9) is arranged closer to the tip (7) than the other section, and that the side (8,9) between the section that is further from the longitudinal axis (5) than another section of this side (8,9) and this other section has a transitional section, in which the side (8,9) moves progressively away from the longitudinal axis (5) as it moves closer to the section which is further from the longitudinal axis (5) than another section of this side (8,9).

8. Device according to Claim 7, **characterized in that** the second element (2) has an opening referred to as the second opening (19) and a part of the wall bounding the second opening (19) is an edge in contact with the transition section of the side (8,9), said edge forming the transition of the wall of the opening to a differently oriented surface of the second element.

9. Device according to one of Claims 1 to 8, **characterized in that** a blind hole (21) is connected to the opening (16) of the first element (2).

10. Device according to Claim 9, **characterized in that** the blind hole (21) is at least partially bounded by a boundary surface which has a profile (17) made of recesses and/or projections along a displacement direction of the clip (1), wherein the displacement direction runs at an angle to the longitudinal axis (5) of the clip (1).

11. Device according to Claim 10, **characterized in that** the profile (17) of the blind hole (21) along the displacement direction has a curved design.

12. Device according to Claim 10 or 11, **characterized in that** the recesses and/or projections of the blind hole (21) are designed in such a manner that they work together with projections and/or recesses at the head of the clip (1), such that the clip (1) is automatically centred in the blind hole (21).

13. Device according to one of Claims 9 to 12, **characterized in that** the wing (6) has a middle part between the support surface (11) provided at the wing end and a starting point of the wing (6), wherein the middle part is formed by sections of the clip (1), the extent of which has a component in the direction perpendicular to the longitudinal axis (5) of the clip (1) and a component parallel to the longitudinal axis (5) of the clip (1), and the middle part of the wing (6) extends from the starting point to a contact line or a contact surface of the wing (6), and therefore of the head, provided at the transition from the middle part to the supporting surface (11), wherein the contact line or the contact surface is in contact with a surface of the blind hole (21), and the starting point of the wing (6) is arranged in a manner spaced apart from the contact line or contact surface of the wing and further away from the tip of the clip (1) than the contact line or contact surface, and at the starting point of the wing (6), a further contact line or contact surface, which is in contact with another surface of the blind hole (21), is provided.

14. Device according to one of Claims 8 to 13, **characterized in that** the extent of the supporting surface (11) in the direction parallel to the longitudinal axis (5) of the clip (1) is more than 0.1 mm smaller than the height of the blind hole (21) measured in the direction parallel to the longitudinal axis (5) in the region in which the supporting surface (11) is located.

15. Use of a clip (1) having a first element (2) and a second element (3), wherein the first element (2) has an opening (16) and the clip (1) is used to fasten the second element (3) to the first element (2), wherein the clip (1) has
• a head (4) having two wings (6) extending from each other in the direction perpendicular to the longitudinal axis (5) of the clip (1) and a tip (7), and
• a first side (8) and a second side (9), wherein the first side (8) and the second side (9) extend from the head (4) to the tip (7) in the direction of the longitudinal axis (5) of the clip (1),
• wherein the first side (8) and the second side (9) are connected to one another via the tip (7) and can be compressed in such a manner that they can be pivoted towards one another about the tip (7),
• wherein at least one side (8,9) has a section which is further away from the longitudinal axis (5) than another section of this side (8,9),
and the clip (1) passes through the opening (16) in such a manner that the head (4) of the clip (1) is arranged on one side of the opening (16) and the tip (7) of the clip (1) is arranged on the opposite side of the opening (16), **characterized in that** at least one wing (6) has at the wing end (10) a supporting surface (11) for the first element (2), which runs at least in sections at an angle of less than 45 degrees to the longitudinal axis (5) of the clip (1).

## Revendications

1. Dispositif comportant une agrafe (1), un premier élément (2) et un deuxième élément (3) fixé au premier élément (2), dans lequel le premier élément (2) présente une ouverture (16) et le deuxième élément (3) est fixé au premier élément (2) au moyen de l'agrafe (1), dans lequel l'agrafe (1) présente
• une tête (4) avec deux ailes (6) s'étendant l'une de l'autre dans la direction perpendiculaire à l'axe longitudinal (5) de l'agrafe (1) et une pointe (7) et
• un premier côté (8) et un deuxième côté (9), dans lequel le premier côté (8) et le deuxième côté (9) s'étendent depuis la tête (4) dans la direction de l'axe longitudinal (5) de l'agrafe (1) vers la pointe (7),
• dans lequel le premier côté (8) et le deuxième côté (9) sont reliés l'un à l'autre par la pointe (7) et sont compressibles de manière à pouvoir pivoter l'un vers l'autre autour de la pointe (7),
• dans lequel au moins un côté (8,9) présente une section qui est plus éloignée de l'axe longitudinal (5) qu'une autre section de ce côté (8,9),
et l'agrafe (1) s'étend à travers l'ouverture (16), de telle sorte que la tête (4) de l'agrafe (1) soit disposée d'un côté de l'ouverture (16) et la pointe (7) de l'agrafe (1) sur le côté opposé de l'ouverture (16), **caractérisé en ce qu'**au moins une aile (6) à l'extrémité d'aile (10) présente une surface d'appui (11) pour le premier élément (2), qui au moins par sections définit un angle inférieur à 45 degrés par rapport à l'axe longitudinal (5) de l'agrafe (1).

2. Dispositif selon la revendication 1, **caractérisé en ce que**, au moins un côté (8,9) de l'agrafe (1) présente une paroi latérale (12), dans lequel la paroi latérale (12) présente un ou plusieurs profilages et/ou découpes (13) et/ou renforts dans la zone jouxtant la tête (4).

3. Dispositif selon une des revendications 1 à 2, **caractérisé en ce que**, une section de bande (14) se rattache du côté de tête au côté (8,9) de l'agrafe (1).

4. Dispositif selon la revendication **3, caractérisé en ce que,**
une section comportant au moins un arc (15) se rattache à la section de bande (14) de l'agrafe (1) dans la zone de transition avec l'aile (10).

5. Dispositif selon une des revendications 1 à 4, **caractérisé en ce que**, l'agrafe (1) est réalisée en symétrie miroir par rapport à un plan qui contient l'axe longitudinal (5) de l'agrafe (1).

6. Dispositif selon une des revendications 1 à 5, **caractérisé en ce que**, la tête et le premier côté et le deuxième côté de l'agrafe (1) font partie d'un élément monobloc, qui a été réalisé par pliage de sections d'un profilé métallique.

7. Dispositif selon une des revendications 1 à 6, **caractérisé en ce que**, la section du côté (8,9), qui est plus éloignée de l'axe longitudinal (5) qu'une autre section de ce côté (8,9) est disposée plus près de la pointe (7) que l'autre section et que le côté (8,9) entre la section qui est plus éloignée de l'axe longitudinal (5) qu'une autre section de ce côté (8,9) et cette autre section présente une section de transition, dans lequel le côté (8,9) se rapproche davantage de la section, qui est plus éloignée de l'axe longitudinal (5) qu'une autre section de ce côté (8,9), de plus en plus éloignée de l'axe longitudinal (5).

8. Dispositif selon la revendication 7, **caractérisé en ce que**, le deuxième élément (2) présente une ouverture désignée comme la deuxième ouverture (19) et une partie de la paroi délimitant la deuxième ouverture (19) est un bord, qui forme la transition de la paroi de l'ouverture vers une surface différemment orientée du deuxième élément, en contact avec la section de transition du côté (8,9).

9. Dispositif selon une des revendications 1 à 8, **caractérisé en ce que**, un trou borgne (21) jouxte l'ouverture (16) du premier élément (2).

10. Dispositif selon la revendication 9, **caractérisé en ce que**, le trou borgne (21) est au moins partiellement limité par une surface de délimitation, qui présente un profil (17) constitué d'évidements et/ou de protubérances le long d'une direction de déplacement de l'agrafe (1), dans lequel la direction de déplacement définit un angle par rapport à l'axe longitudinal (5) de l'agrafe (1).

11. Dispositif selon la revendication 10, **caractérisé en ce que**, le profil (17) du trou borgne (21) est incurvé le long de la direction de déplacement.

12. Dispositif selon la revendication 10 ou 11, **caractérisé en ce que**, les évidements et/ou protubérances du trou borgne (21) sont agencés de telle sorte qu'ils coopèrent avec des protubérances et/ou évidements sur la tête de l'agrafe (1), de sorte que l'agrafe (1) soit automatiquement centrée dans le trou borgne (21).

13. Dispositif selon une des revendications 9 à 12, **caractérisé en ce que**, l'aile (6) présente une partie centrale entre la surface d'appui (11) prévue à l'extrémité de l'aile et un point de départ de l'aile (6), dans lequel la partie centrale est formée par des sections de l'agrafe (1), dont l'extension a une composante dans la direction perpendiculaire à l'axe longitudinal (5) de l'agrafe (1) et une composante parallèle à l'axe longitudinal (5) de l'agrafe (1) et la partie centrale de l'aile (6) s'étend depuis le point de départ jusqu' à une ligne de contact ou surface de contact de l'aile (6) prévue à la transition de la partie centrale à la surface d'appui (11), et donc de la tête, dans lequel la ligne de contact ou surface de contact est en contact avec une surface du trou borgne (21), et le point de départ de l'aile (6) est disposé espacé de la ligne de contact ou de la surface de contact de l'aile et plus éloigné de la pointe de l'agrafe (1) que la ligne de contact ou la surface de contact, et au point de départ de l'aile (6), une autre ligne de contact ou surface de contact est prévue, qui est en contact avec une autre surface du trou borgne (21).

14. Dispositif selon une des revendications 8 à 13, **caractérisé en ce que**, l'extension de la surface d'appui (11) dans la direction parallèle à l'axe longitudinal (5) de l'agrafe (1) est inférieure de plus de 0,1 mm à la hauteur du trou borgne (21), mesurée dans la direction parallèle à l'axe longitudinal (5) dans la zone, dans laquelle se trouve la surface d'appui (11).

15. Utilisation d'une agrafe (1) comportant un premier élément (2) et un deuxième élément (3), dans lequel le premier élément (2) comporte une ouverture (16) et l'agrafe (1) est utilisée pour maintenir le deuxième élément (3) à fixer au premier élément (2), dans lequel l'agrafe (1) présente
• une tête (4) avec deux ailes (6) s'étendant l'une de l'autre dans la direction perpendiculaire à l'axe longitudinal (5) de l'agrafe (1) et une pointe (7) et
• un premier côté (8) et un deuxième côté (9), dans lequel le premier côté (8) et le deuxième côté (9) s'étendent depuis la tête (4) dans la direction de l'axe longitudinal (5) de l'agrafe (1) vers la pointe (7),
• dans lequel le premier côté (8) et le deuxième côté (9) sont reliés l'un à l'autre par la pointe (7) et sont compressibles de manière à pouvoir pivoter l'un vers l'autre autour de la pointe (7),
• dans lequel au moins un côté (8,9) présente une section qui est plus éloignée de l'axe longitudinal (5) qu'une autre section de ce côté (8,9), et l'agrafe (1) s'étend à travers l'ouverture (16) de telle sorte que la tête (4) de l'agrafe (1) soit disposée d'un côté de l'ouverture (16) et la pointe (7) de l'agrafe (1) sur le côté opposé de l'ouverture (16), **caractérisée en ce qu'**au moins une aile (6) à l'extrémité d'aile (10) présente une surface d'appui (11) pour le premier élément (2), qui au moins par sections définit un angle inférieur à 45 degrés par rapport à l'axe longitudinal (5) de l'agrafe (1).
